# EUROPEAN PATENT APPLICATION

(11) **EP 1 205 243 A1**
(43) Date of publication of application: **15.05.2002**
(21) Application number: 00203953.5
(22) Date of filing: 09.11.2000
(51) Int. Cl.: B01J 35/00, B01J 21/06, B01J 37/02

(54) **Preparation of firmly-anchored photocatalitically-active titanium dioxide coating films with non-gelled organic-doped precursors**

(71) Applicant: Neomat S.A., 1219 Luxembourg (LU)
(72) Inventor: Maurino, Valter, Univ. degli Studi di Torino, 10125 Torino (IT); Minero, Claudio, Univ. degli Studi di Torino, 10125 Torino (IT); Pelizzetti, Ezio, Univ. degli Studi di Torino, 10125 Torino (IT)
(74) Representative: Luppi, Luigi

(57) **Abstract**

The production of thin films of titanium dioxide in the anatase crystallographic structure performing with high photocatalytic activity is made possible on transparent inorganic substrates. The film is produced through deposition (roll, spray, dip coating) of a stable liquid precursor containing an inorganic or metal-organic compound of titanium(IV) partially or totally hydrolyzed in the presence of acid, surfactants and, eventually, s-triazine derivatives. The last improve the photocatalytic activity of the film and its resistance to bases. The gelation of the precursor is blocked by the presence of acid and/or a suitable surfactant. The absence of gelification avoids the need of further repeptization of the gel, as usually required in the common sol-gel methods. The liquid precursor is stable in air, and storable for some months without alteration. Thin films produced in this way show optimal transparency in the visible and induce strong abatement of pollutants under illumination, either in the aqueous or gas phase. Applications range from water purification, waste abatement, air cleaning and deodorization, indoor disinfecting, and self-cleaning transparent glass, goods, fabric, and other architectural or functional elements.

## Description

The invention concerns a process for the coating of inorganic transparent supports with a functional material consisting of thin films containing TiO₂ according to the preamble of claim 1. Such films, under light irradiation, can catalyze several redox processes. These processes result in several applications like pollutant abatements in gaseous and water streams, water potabilization, deodorizing and antibacterial functions for indoor air conditionings, self cleaning architectural ornaments and elements.

In the published technical and scientific literature the principle of semiconductor photocatalysis and the possible application fields are deeply described, in particular for the organic pollutant abatement from air and aqueous systems (E. Pelizzetti, N. Serpone, E. Pramauro, M. Barbeni, E. Borgarello, M. Graetzel, Nouv. J. Chim. 1984, 8, 547-550; E. Pelizzetti, N. Serpone, Heterogeneous Photocatalysis, J. Wiley and Sons 1989; E. Pelizzetti, C. Minero, V. Maurino, Adv. Colloid and Interf. Sci. 1990, 32, 271-316; D. F. Ollis, H. Al-Ekabi, Photocatalytic Purification and Treatment of Water and Air, Elsevier, Amsterdam, 1993). Practical examples of photocatalytic applications include the organic material mineralization in industrial waste, water potabilization, the recovery of noble metals from water, air cleaning in general, and in particular in indoor thermal and environmental air conditioning, deodorization, the manufacturing of architectural ornaments and elements (glass and shop windows, windows) that requires less duty for cleaning, the fabrication of lamps and shielding of them, accumulating less dirt. In addition the photocatalytic materials have disinfecting properties, which make them useful for keeping germ free the medical rooms.

The primary events, on which photocatalytic treatment is based on, have been matter of ample research as witnessed by the huge literature published in the field (see for example the review in E. Pelizzetti, C. Minero, Mechanism of the photooxidative degradation of organic pollutants over titanium dioxide particles, Electrochim. Acta, 38, 47-55 (1993) in order to have a view on the state of art). They imply the absorption by the semiconductor of a photon having energy greater than the band gap. As far as titanium dioxide is concerned, photons must have wavelength below 380-400 nm. These photons are still present in the solar spectrum at the sea level. Following absorption an electron/hole pair is formed. Then the electronic carriers can recombine, or migrate to the surface where, either by direct electron transfer or by trapping on surface sites and their subsequent reaction, react with the solvent (e.g. water if it is present) or organic and inorganic species adsorbed or transported to the interface. Some of these species are oxidized and some reduced, as oxygen and other electron scavengers do. In the presence of oxygen numerous organic substances are oxidized until full mineralization is achieved, so that carbon dioxide and inorganic ions are formed. The main advantage of the photocatalytic process lies in his ability to mineralize organic compounds, overcoming the deficiencies of other cleaning technologies that simply transfer the pollutants from one phase to another one. The role of the consecutive and parallel kinetic processes on the overall performance of the process has been subject of several theoretical and experimental studies (see for example C. Minero, Kinetic analysis of photoinduced reactions at the water semiconductor interface, Catalysis Today, 54, 205-216 (1999) and the literature cited therein).

The main issues on the practical application of the photocatalytic processes concern: a) the activity of the catalyst (or its photon efficiency), that is alleged insufficient for available semiconductor materials. b) the availability of a low cost semiconductor firmly anchored on a transparent support. c) the stability of the photocatalytic coating to exposure to alkaline media and surfactants. d) the homogeneity of the films and their transparency, that are an important issue for applications where efficient transmission of visible light, uniform features and aesthetic prerequisites are needed. Deposition methods such as sputtering and chemical vapor deposition are costly and not suitable for support on any shape. The deposition on the materials concerned in the present invention of previously prepared powders of titanium dioxide (see for example the EP patent publications Nos. 792687A1, 684075A1, 866101A1) usually leads to coated materials that are not resistant to abrasion, with insufficient optical quality, either for homogeneity or transparency, or it requires the use of adhesives, either inorganic melting agents or polymers, often having adverse effects on the catalyst activity, its performance in the photocatalytic process, and limiting its efficacy toward its final scope. Finally, the partially opaque surfaces obtained in this way scatter more light, compromising the usefulness in applications where good transparency is required.

The previous issues could be improved using coating procedures with liquid precursors (by spray, roll or dip-coating) prepared by preventing, after the solvolysis, the gelation of sols of Ti(IV). This approach is inexpensive, allows a great freedom of formulation (composition of the liquid precursor as amount and type of solvents, dopants, starting materials containing Ti(IV)), is applicable to supports in a variety of shapes and sizes, and does not require the time-consuming re-peptization of the gel or the preformed oxide particles as usual sol-gel procedures.

The European patent publication No. 737513A1 claims the generic use for photocatalytic purposes of thin and transparent (to visible spectrum) films of TiO₂ deposited on transparent substrates, with or without an in-between layer, by using solutions of Ti(IV) alkoxides and chlorides. However, such possibility has been demonstrated in the scientific literature well before the patent. The scientific literature reports on the making of thin films of titanium dioxide on transparent supports (in particular glass beads) and their application to both oxidative (organic pollutant destruction in aqueous systems) and reductive processes (noble metal recovery from water, Cr(VI) decontamination). See for example: E. Borgarello, N. Serpone, M. Barbeni, C. Minero, E. Pelizzetti, E. Pramauro "Putting Photocatalysis to Work", in "Homogeneous and Heterogeneous Photocatalysis", E. Pelizzetti and N. Serpone Eds, Reidel, Dordrecht, 1986, pages 673-689; N. Serpone, E. Borgarello, R. Harris, P. Cahill and E. Pelizzetti, Sol. En. Mat., 1986, 14, 121; J. Sabate, M.A. Anderson, M.A. Aguado, J. Gimenez, S. Cervea-March, C.G. Hill, Journal of Molecular Catalysis, 1992, 71, 57-68; M.A. Anderson, M.S. Gieselmann, Q.Xu, Journal of Membrane Science, 1988, 39, 243-258. In addition, the European patent 737513A1 does not disclose the procedure and the formulation details for the production of the precursors used in the coating, neither in the claims nor in the examples. In the examples one composition of the liquid precursor utilizes acetylacetone as solvent, which is not included in the present invention.

The generic preparations that can be imagined from the technical scientific and patented literature are not usually stable with time, may gel and settling down solid particles becoming useless for industrial preparations, or producing coating films of insufficient optical and aesthetic quality either for transparency or homogeneity. The resistance of these films to abrasion and chemical agents is often unknown. Some modifications supposed to increase the photocatalytic activity of the film are often indicated, like addition of traces of metals, without the detailed indication of the effects of any of these. It is a long time since the scientific literature reported the effects of microscopic. metal islands on several crystalline modification of titanium dioxide (see for example M. R. Hoffmann, S. T. Martin, W. Choi, D. W. Bahnemann, Environmental application of semiconductor photocatalysis, Chem. Rev. 95, 69-96 (1995); D. F. Ollis, H. Al-Ekabi, Photocatalytic Purification and Treatment of Water and Air, Elsevier, Amsterdam, 1993), and its doping with metal ions. Not always the photocatalytic activity is improved. Here the first case of organic doping with beneficial influence on the photocatalytic activity is reported.

The process of the present invention is defined in the characterizing portion of claim 1.

The present invention pertains to a process to coat transparent inorganic supports (for example alkaline and borosilicate glass, quartz, fused silica) with thin films of titanium dioxide in the anatase crystalline form having relevant photocatalytic activity, and the use of organic dopants to improve the photocatalytic activity. The coatings realized with the present methodology show 0.05 to 10 µm film thickness, are resistant to atmospheric factors and abrasion, are thoroughly and absolutely homogeneous, and transmissive on average over 80% in the visible spectrum. The process consists of the deposition on the support of a stable liquid precursor made of inorganic or metal-organic compounds of Ti(IV) partially or totally hydrolyzed, and surfactants, and/or acids, and a suitable organic doping, in particular s-triazine derivatives, included to improve the photocatalytic activity and mechanical resistance, followed by a thermal treatment to achieve the film densification. The claimed procedure allows avoiding the gelification of the precursor, running away the need of further re-peptization of the gel as usually required in the common sol-gel methods. The liquid precursor is stable in air, and storable for some months without alteration. The films realized through the reported procedure do not decrease significantly either their photocatalytic activity or the adhesion to the support after treatment with alkaline solutions embodying also surfactants. The doping with s-triazine derivatives results in an average improvement of the photocatalytic activity of 2-3 times with respect to non-doped films.

The present invention concerns the manufacture of homogeneous and transparent (in the visible spectrum) coating films of titanium dioxide in the anatase crystalline form on inorganic transparent supports, like different types of glasses, quartz, fused silica, through the deposition by dip-coating, spray or roll of liquid precursors of which the composition is disclosed. The invention improves on the issues previously discussed, and leads to photocatalytic activities superior to those obtained in the absence of nitrogen-containing dopants that are included in the formulation below disclosed. The process requires no interlayer or binder between the support and the photocatalytic film.

The liquid precursor is prepared by hydrolysis or partial or total solvolysis of compounds of tetravalent titanium under conditions in which the gelation is avoided. The concentrations of Ti(IV) range from 0.1% to 35% by weight. Titanium compounds included in the formulation are alkoxides, and in particular tetrabutoxy-ortho-titanate, tetrapropoxy-ortho-titanate, tetraisopropoxy-ortho-titanate, or halides, in particular the tetrachloride, or other kind of complexes like bis(ammonium lactate)dihydroxyde titanium(IV). The solvolysis is carried out from 1 min to 36 hours, at temperatures ranging from 5°C to the solvent boiling point, eventually under pressure (1-20 atm) at temperatures ranging from 0°C to 120 °C. The solvolysis is necessary to form compounds of Ti(IV) that are less volatile than the original compounds, unable to vaporize during the subsequent thermal treatment, and showing good film sticking properties, and sufficient thickness to the support. Otherwise, the precursor could be partially or completely vaporized and lost during the thermal treatment, with formation of irregular and/or discontinuous or no coatings. The water concentration needed by the hydrolysis ranges from 0.1% to 30% by weight.

The solvents needed in the formulation of the liquid precursors are alcohols, also polyfunctional and containing oxygen in ether bonds, carrying 1-10 carbon atoms and 1-6 oxygen atoms, or lactones containing 4-6 carbon atoms, or their mixtures in all proportions. The solvent choice is based on the procedure used for the deposition (dip-coating, spray, roll-coating) and the desired depth of the resulting coating film of titanium dioxide.

The gelation of the liquid precursor, either contemporary to the preparation step or when the precursor is stored before deposition renders it incompatible with the deposition with dip-coating, spray or roll-coating, especially if thin films below 10 µm are desired. To avoid gelation an inorganic or organic acid is added at concentrations ranging from 0.1% to 20% by weight and/or a surfactant of type nonionic, or cationic, or anionic, or zwitterionic and their mixtures in all proportions, at concentrations ranging from 0.01% to 50% by weight. The presence of surfactant and/or the acid as the additional effect of inhibiting the formation in the liquid precursor of titanium dioxide particles having diameter larger than 100 nm, that will form coating films less resistant to the abrasion and less uniform. The disclosed formulation leads to the formation of polymeric titanates that under the thermal treatments hereafter disclosed form compact and non porous anatase films showing excellent adhesive properties on the supports above specified. The gelation processes and formation of particulate titanium dioxide are inhibited by the presence of the acid and/or the surfactant at temperatures ranging from -10°C to 100 °C. At ambient temperature the disclosed formulation renders the precursor stable against gelation and particle formation and settling for 6 to 12 months, depending on the composition.

Among inorganic acids the following are suitable: nitric acid, sulfuric acid, phosphoric acid, hydrofluoric acid, hydrochloric acid, perchloric acid and their mixtures in all proportions. Among organic acids are adequate those with linear or branched chains, also with 2 or 3 carboxylic groups and/or containing hydroxyl-, and/or chloro-, and/or fluoro-, and/or bromo- groups, or benzoic acid and its derivatives, and/or other carboxylic acid with aromatic structure.

Non-ionic surfactants alkyl- or alkylarylethoxylate and their mixtures in all proportions (for example the commercial products Brij 30, Brij 35, Triton X100), and/or alkyl or alkylethoxysulphate anionic surfactants (for example sodium dodecyl sulphate), and/or alkylbenzene sulphonate, and/or cationic surfactants, e.g. cetyltrimethylammonium bromide, and/or zwitterionic surfactants, like betaine derivatives, are among the surfactants useful to block the gelation and TiO₂ particle growth.

The s-triazine ring, which is characteristic of compounds like melamine, cyanuric acid, cyanurates, cyanuric chloride, was found to have a positive influence on the photocatalytic activity when added as dopant to the precursor formulation. Many s-triazine compounds show excellent thermal stability (melamine placed in a sealed vial is stable to red heat, see for example E. M. Smolin, L. Rapoport, s-Triazines, in: A. Weissenberg Ed., The Chemistry of Heterocyclic Compounds, Vol. 13A, Wiley Interscience, New York, 1959). The s-triazine derivative doping gives the photocatalytic film a good stability against treatment with alkaline media and surfactants, concerning both adhesion on the support and the photocatalytic activity. The photoactivity of the doped film is increased by a factor 1.5-3 when in the precursor formulation is introduced a selected s-triazine derivative in concentration ranging from 0.1 to 20% by weight.

The coating with the precursor made by the above cited procedures, is followed by a thermal treatment lasting 10-200 min at temperatures ranging from 300°C to 800°C, in the presence of a gas phase containing oxygen in the range 1% to 50% by volume, in order to fully convert the precursor in microcrystalline anatase TiO₂, and obtain a coating with good mechanical and chemical stability.

The formulations and procedures here disclosed allow the manufacture of homogeneous and transparent (in the visible spectrum) coating films of titanium dioxide in the anatase cristalline form on inorganic transparent supports. The coating films show relevant photocatalytic activity. The formulations disclosed allow the preparation of liquid, non-gelled and stable precursors for film fabrication with low cost coating procedures (dip, spray or roll coating). The absence of gelification avoids the need of further re-peptization of the gel, as usually required in the common. sol-gel methods. The liquid precursor is stable in air, and storable for some months without alteration. The supported films obtained show very good mechanical properties, adesiveness to the support and scratching resistance without the intervention of an in-between layer.

This is the first report of an advantageous organic doping of titanium dioxide films. Nitrogen containing organic dopants, like s-triazine compounds, enhance significantly the photocatalytic activity of the film. Moreover, the organic doped films do not decrease significantly either their photocatalytic activity or the adhesion to the support when treated with alkaline solutions embodying also surfactants.

Table 1 shows the best mode of carrying out the invention by one example of the precursor composition used for the coating of the films thereof, in agreement with the claim 8 in the absence of the s-triazine derivative doping, of the type of support used and the temperature of the thermal treatment. Sometimes the preparation has to be carried out under nitrogen athmosphere, depending on the organic solvent. A thermal aging could improve the precursor performance by completing the hydrolysis and/or solvolysis of the original titanium compound. After thermal aging, the exemplified formulation does not gel nor nucleate solid particles within 6-12 months if stored in the dark and in a closed container at ambient temperature (≤ 25°C).

**Table 1.**

| Example of film coating on inorganic transparent support according to the disclosed procedure, showing the weight % of Ti(IV) starting compound, acid, surfactant and solvent, the coating procedure and details of the thermal treatment. | | | |
|---|---|---|---|
| **Step 1: Liquid precursor formulation** | | | |
| *Component* | *Weight %* | | *Preferred Weight %* |
| Isopropyl alcohol | 46 to 88.7 | | 76 |
| Phosphoric acid 85% | 0.1 to 10 | | 0.8 |
| Water | 0.2 to 4 | | 2.9 |
| Brij 30 | 1 to 20 | | 2.3 |
| Tetrapropoxy-ortho-titanate | 10 to 20 | | 18 |

| **Step 2: Aging :** closed container for 24 h at 60°C | | | |
|---|---|---|---|
| **Step 3: Coating and film densification** | | | |
| Deposition procedure | | Dip-coating, rate 12 cm min⁻¹ | |
| Support | | Pyrex glass | |
| Thermal treatment | | 400 °C for 30 min under forced air flow. | |

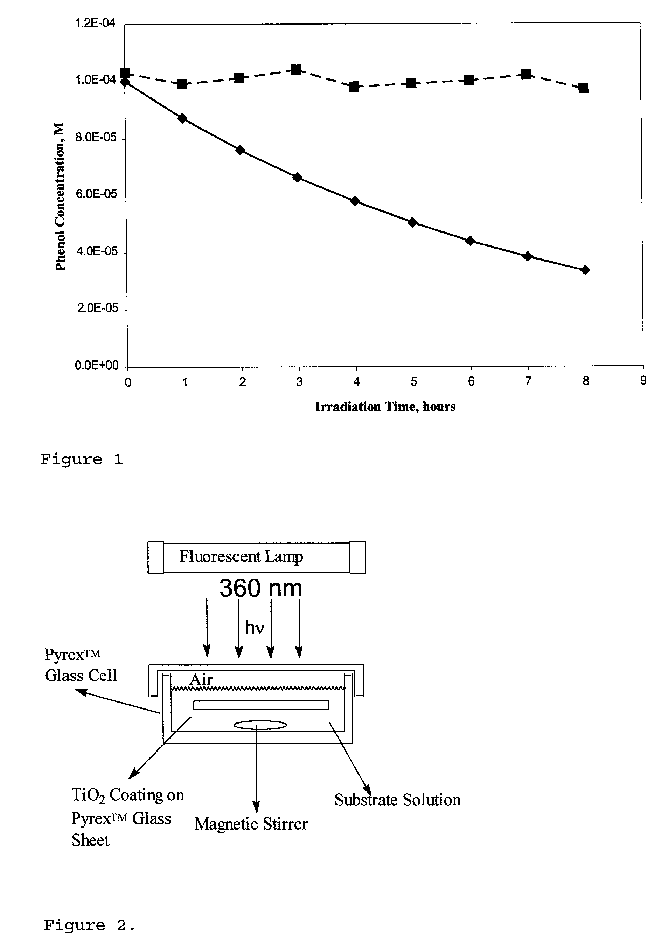

Figure 1 reports the results of the tests on photocatalytic activity showed by a TiO₂ film prepared according to claim 8 (without s-triazine derivative doping). The activity was checked by measuring the degradation rate of a model organic compound in aqueous solution (see the legend of Figure 1 for details). Figure 2 shows a scheme of the experimental setup employed for the photoactivity tests in the liquid media. After 15 hours of irradiation the dissolved organic carbon (DOC) was no longer detectable with standard catalytic combustion DOC measurement apparatus (Shimadzu TOC 5000). The film activity does not show any appreciable variation even after 50 tests. The irradiation of a control (Pyrex glass sheet without TiO₂ film) did not lead to any appreciable decrease of the organic substrate concentration, and consequently of DOC, within 24 hours, thus confirming that phenol degradation is due to the photocatalytic activity of the TiO₂ coating.

The film adhesion on the support, and the abrasion resistance are not adversely affected by a treatment with hot concentrated sulfuric acid and aqueous sodium carbonate (10% by weight in water). The film is not scratched by a pen eraser, and it is not removed by a series of 20 abrasions with fine grit paper (1000 mesh) under a 3 kg cm⁻² load. These coating properties are crucial in the above cited applications of photocatalytic films (e.g. purification and/or detoxification of water and wastewater), where abrasion form liquids and/or solid suspended matter can remove a loose coating, or for application where washings with commercial detergents (acid or alkaline surfactant solutions) can not be excluded.

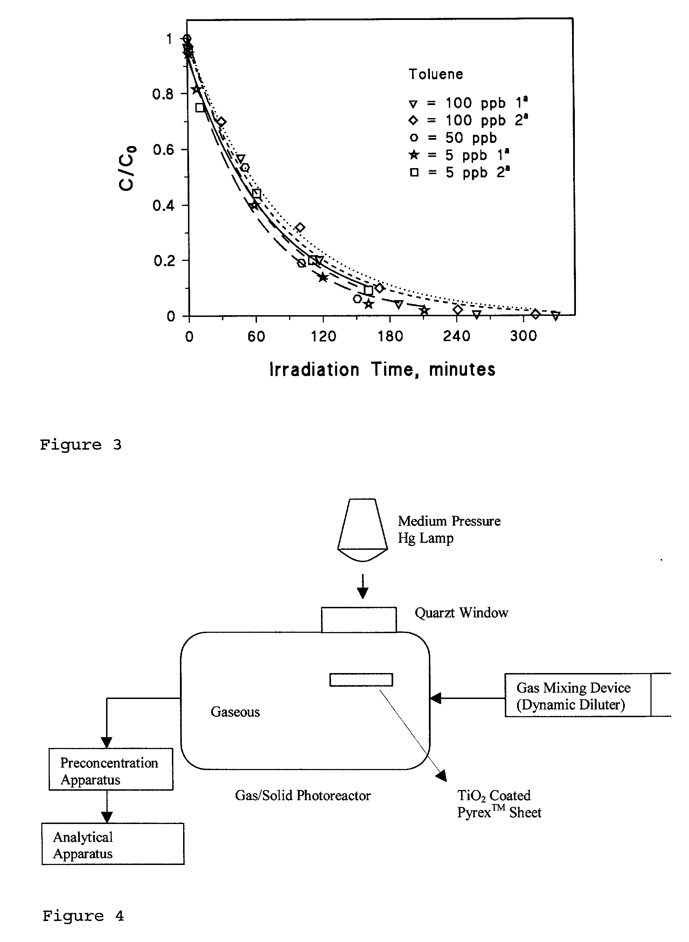

Figure 3 shows test results on the photocatalytic activity in gaseous phase. The film activity was measured through the disappearance rate of gaseous toluene (5-100 ppbv) in a gas-solid photoreactor. See figure 4 for a scheme of the test apparatus. The degradation rate of toluene follows a pseudo-first order kinetic law for concentration up to 100 ppbv with a decay constant not dependent from the substrate concentration. Thus the degradation rate increases linearly with the increase of the substrate concentration in the concentration range explored. Control experiments carried out irradiating the Pyrex glass support without catalyst film, showed no appreciable decrease of substrate concentration even after 70 hours of irradiation.

No persistent volatile organic compounds were formed from the degradation of toluene. These results show the suitability of the invention for applications like deodorization of indoor ambient and the purification of gaseous streams contaminated by volatile organic compounds. The use of photocatalytic films for the purification of indoor air allows the use of recirculated air as a partial substitute of fresh air, helping in cutting back heating costs in heat, ventilation and conditioning systems.

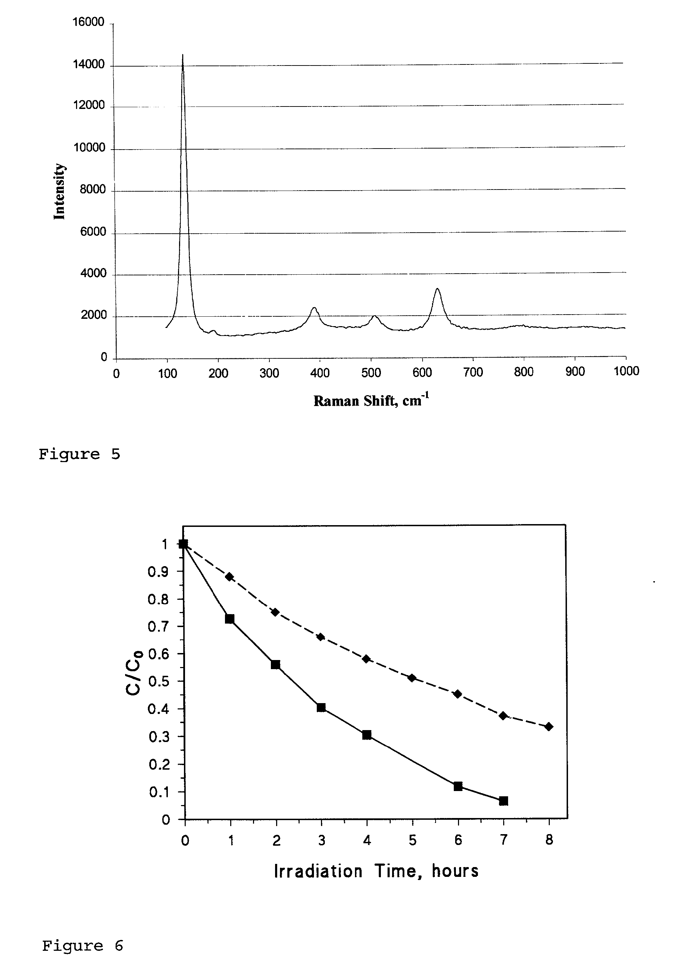

Figure 5 reports the Raman spectrum of the TiO₂ coating. It is worth to note the exclusive presence of the Raman lines of the anatase cristalline form (136, 389, 509, 631 cm⁻¹), whereas emissions from rutile are absent (440 and 620 cm⁻¹). The reported spectrum exactly matches the spectrum of microcrystalline anatase specimen. The line width indicates a microcristalline habit of the film, excluding the presence of a large portion of amorphous zones. The spectrum was collected with a dispersive confocal Raman microspectrometer (see Figure 5 caption for details).

The photoactivity of the doped film is increased by a factor 1.5-3 when in the precursor formulation is introduced a selected s-triazine derivative in concentration ranging from 0.1 to 20% by weight. The s-triazine derivative doping gives also the photocatalytic film a good stability against treatment with alkaline media and surfactants, both for the adhesion on the support, and the photocatalytic activity. Table 2 reports the preparation procedure of a TiO₂ coating doped with cyanuric chloride, according to claim 8.

**Table 2.**

| Example of film coating doped with cyanuric chloride on inorganic transparent support according to the disclosed procedure, showing the weight % of Ti(IV) starting compound, acid, surfactant and solvent, the coating procedure and details of the thermal treatment. | | |
|---|---|---|
| **Step 1: Liquid precursor formulation** | | |
| *Component* | *Weight %* | *Preferred Weight %* |
| Isopropyl alcohol | 36 to 87.7 | 71.6 |
| Phosphoric acid 85% | 0.1 to 10 | 0.3 |
| Water | 0.2 to 4 | 2.8 |
| Brij 30 | 1 to 20 | 2.2 |
| Tetrapropoxy-ortho-titanate | 10 to 20 | 17.3 |
| Cyanuric Chloride | 1 to 10 | 6.0 |

| **Step 2: Aging :** closed container for 24 h at 60°C | | |
|---|---|---|
| | | |

| **Step 3: Coating and film densification** | | |
|---|---|---|
| Deposition procedure | Dip-coating, rate 12 cm min⁻¹ | |
| Support | Pyrex glass | |
| Thermal treatment | 700 °C for 30 min under forced air flow. | |

Figure 6 compares the photoactivity tests of doped and undoped films prepared according to claim 8 (undoped film is prepared from a precursor without cyanuric chloride). The pseudo-first order kinetic constants for phenol disappearance are 0.14 and 0.35 hours⁻¹ for the undoped and doped film, respectively. As a result of the doping, the photocatalytic activity is increased by a factor of 2.5 under the reported experimental conditions.

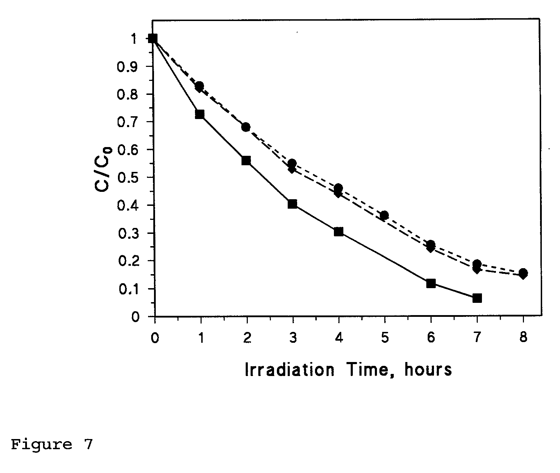

The s-triazine derivative doping endows the photocatalytic film with good stability against treatment with alkaline media and surfactants, concerning both adhesion on the support, and the photocatalytic activity. Figure 7 shows the test results on the photocatalytic activity of doped TiO₂ films, prepared according to claim 8, before and after one and two treatments (24 hours immersion at a temperature of 25±5 °C) with a solution containing Na₂CO₃ (100 g L⁻¹) and sodium dodecyl sulfate (50 g L⁻¹). After the first basic treatment the decrease in the photocatalytic activity was under 10% of the initial one. The second treatment did not lead to a further decrease in the photocatalytic activity. These results confirm the good stability of the doped films against treatments with alkaline and/or surfactant solutions.

The adhesion on substrate and the resistance to abrasion of the doped films are not adversely affected also by treatment with concentrated sulfuric acid or with Na₂CO₃ 10%.

The present invention is susceptible to modifications in the methods and materials, as well as alterations in the fabrication methods and equipment. Such modifications will become apparent to those skilled in the art from a consideration of this disclosure or practice of the invention disclosed herein. Consequently, it is not intended that this invention be limited to the specific embodiments disclosed herein, but that it covers all modifications and alternatives coming within the true scope and spirit of the invention as embodied in the attached claims.

In order that the application will be fully understood reference is made on the accompanying drawings:
**Figure 1.** Results of the tests on the photocatalytic activity of a TiO₂ film coated on Pyrex glass with a liquid substrate. The film was prepared with a non-gelled precursor having a composition according to claim 8, but without s-triazine derivative dopant. Substrate: aqueous phenol solution (1.0×10⁻⁴ M). (◆) TiO₂ film with an active surface of 16 cm², irradiated with a fluorescent lamp (TL K 05 40 W Philips, radiation intensity incident on the film 30 Wm⁻². See figure 2 for a scheme of the experimental set-up). (■) Control specimen (Pyrex sheet without TiO₂ film).
**Figure 2.** Experimental setup employed for the tests on photocatalytic activity with liquid substrates. The volume of the liquid in the cell is 35 cm³. For other data see Figure 1 caption.
**Figure 3.** Test results on the photocatalytic activity of a TiO₂ film coated on Pyrex glass with a gaseous substrate. The film was prepared with a non-gelled precursor having a composition according to claim 8, but without s-triazine derivative dopant. Substrate: toluene in air (20% O₂, 1.94% H₂O, 70 L) at the concentration reported. The active surface of the TiO₂ film was 360 cm², irradiation was carried out with a medium pressure Hg lamp (Philips mod. HPR 125 W HG, radiation intensity incident on the film 25 Wm⁻²). See figure 4 for a scheme of the experimental setup. Tests on the control specimen (Pyrex glass sheet without photocatalyst) showed concentration decreases of toluene concentration under 5% after 70 hours irradiation.
**Figure 4.** Experimental setup employed for the evaluation of the photocatalytic activity of TiO₂ films in the degradation of volatile organic compounds and permanent gases in the gaseous phase. The gas/solid photoreactor has a volume of 70 liter, is connected to an analytical apparatus (gas-chromatograph with a quadrupolar mass selective detector, equipped with a preconcentration system, allowing detection limit of the order of few pptv for most volatile organic compounds), and to a dynamic diluter for gaseous mixture preparation.
**Figure 5.** Raman spectrum of a TiO₂ film coated on Pyrex glass and manufactured starting from a non-gelled liquid precursor having a composition in accordance with claim 8, but without s-triazine derivative doping. The spectrum was recorded with a Renishaw confocal microspectrophotometer mod. Raman 2000. The Raman signal intensity is reported in relative units.
**Figure 6.** Comparison of the photocatalytic activity ot TiO₂ films undoped (◆) and doped with a s-triazine compound (■) (cyanuric chloride). Substrate: aqueous phenol solution (1.0×10⁻⁴ M). Other conditions as in figure 1.
**Figure 7.** s-Triazine derivative doped TiO₂ film stability against alkaline treatments. Substrate: aqueous phenol solution (1.0×10⁻⁴ M). Other conditions as in figure 1. TiO₂ film before (■) and after 24 (◆) and 48 hours (●) of treatment with a solution containing Na₂CO₃ 100 g L⁻¹ and sodium dodecyl sulfate 50 g L⁻¹.

## Claims

1. A process for the coating of inorganic transparent supports with thin films containing TiO₂, **characterized in** applying films comprising a concentration ranging from 50 to 99.9% by weight as titanium dioxide, having remarkable photocatalytic activity and thickness ranging from 0.05 to 10 µm, consisting by
a) dip coating, roll coating or spray coating non-gelled precursors obtained through solvolysis of Ti(VI) compounds from 1 min to 36 hours, at temperatures ranging from 5°C to the solvent boiling point, eventually under pressure (1-20 atm) at temperatures ranging from 0°C to 120 °C, eventually doped with a selected s-triazine derivative, and/or urea, and/or dicyandiamide;
b) thermal treating in the presence of 1% to 50% by volume of O₂ at temperatures ranging from 300 to 800 °C.

2. The process according to claim 1, **characterized in that** the non-gelled liquid precursors contain in their formulation the following five components:
a) Ti(IV) compound in concentrations ranging from 0.1% to 35% by weight, including alkoxides, and in particular tetrabutoxy-ortho-titanate, tetrapropoxy-ortho-titanate, tetraisopropoxy-ortho-titanate, or halides, in particular the tetrachloride, or other kind of complexes like bis(ammonium lactate)dihydroxyde titanium(IV) ;
b) water ranging from 0.1% to 30% by weight;
c) an organic solvent, which can be alcohols, also polyfunctional and containing oxygen in ether bonds, carrying 1-10 carbon atoms and 1-6 oxygen atoms, or lactones containing 4-6 carbon atoms, or mixtures thereof in all proportions;
d) an organic or mineral acid and mixtures thereof at concentrations in the range 0.1% to 20% by weight, in order to stop the precursor gelation at temperatures in the range -10 to 100 °C.
e) a surfactant or a surfactant mixture at a total concentration in the range 0.01% to 50% by weight, comprising non-ionic surfactants like alkyl or alkylarylethoxylate and their mixtures in all proportions, and/or alkyl or alkylethoxysulphate anionic surfactants, and/or alkylbenzene sulphonate, and/or cationic surfactants, and/or zwitterionic surfactants, like betaine derivatives.

3. The process according to claim 2, **characterized in that** the formulation of the non-gelled liquid precursor comprises a s-triazine derivative, and/or urea and derivatives, and/or dicyandiamide and derivatives, or mixtures thereof in all proportions, at concentrations in the range 0.1% to 20% by weight, in order to enhance the photocatalytic activity of the TiO₂ film and its resistance to alkaline agents and surfactants, preferably cyanuric chloride in concentrations ranging from 1 to 10% by weight.

4. The process according to claims 2 and 3, **characterized in that** the solvolysis of the Ti(IV) compound contained in the precursor is carried out with water or glycols in concentrations ranging from 0.1% to 10%, preferably water and/or ethylene glycol and their mixtures in all proportions from 0.2 to 4% by weight.

5. The process according to claims 2 to 4, **characterized in that** the formulation of the non-gelled liquid precursor comprises mineral acids, like nitric or hydrochloric or perchloric or sulfuric or phosphoric or hydrofluoric acid, or mixture thereof in all proportions, at concentrations in the range 0.1% to 10% by weight.

6. The process according to claims 2 to 4, **characterized in that** the formulation of the non-gelled liquid precursor comprises an organic acid with linear or branched carbon chain, also containing more than one carboxylic functionality and/or OH groups, fluorine, chlorine, bromine, or benzoic acid and/or its derivatives, or mixtures thereof in all proportions, preferably acetic acid, at concentrations ranging from 0.1% to 10% by weight.

7. The process according to any claims 2 to 6, **characterized in that** the formulation of the non-gelled liquid precursor preferably comprises alkyl and/or alkylphenyl polyethoxylates at concentrations ranging from 1% to 20% by weight.

8. The process according to any claims 2 to 7, **characterized in that** the formulation of the non-gelled liquid precursor comprises titanium(IV) alkoxides at concentrations in the range 1% to 35% by weight, preferably 10% to 20%.
